# EUROPÄISCHE PATENTSCHRIFT

(11) **EP 3 538 351 B1**
(45) Veröffentlichungstag und Bekanntmachung des Hinweises auf die Patenterteilung: **29.12.2021**
(21) Anmeldenummer: 17792048.5
(22) Anmeldetag: 30.10.2017
(51) Int. Cl.: B29C 64/364, B29C 64/30, B29C 35/16, B29C 71/02, B33Y 40/00

(54) **VERFAHREN UND VORRICHTUNG ZUR ADDITIVEN FERTIGUNG EINES DREIDIMENSIONALEN WERKSTÜCKS**
METHOD AND APPARATUS FOR THE ADDITIVE MANUFACTURING OF A THREE-DIMENSIONAL WORKPIECE
PROCÉDÉ ET DISPOSITIF DE FABRICATION ADDITIVE D'UNE PIÈCE TRIDIMENSIONNELLE

(30) Priorität: 08.11.2016 DE 102016221821
(43) Veröffentlichungstag der Anmeldung: 18.09.2019
(73) Patentinhaber: Robert Bosch GmbH, 70442 Stuttgart (DE)
(72) Erfinder: DUEFORMANTEL, Christian, 73730 Esslingen (DE)
(86) Internationale Anmeldenummer: PCT/EP2017/077772
(87) Internationale Veröffentlichungsnummer: WO 2018/086937

(56) Entgegenhaltungen:
- WO-A1-00/78519
- CN-U- 204 894 557
- US-A- 658 412

## Beschreibung

Die vorliegende Erfindung betrifft ein Verfahren zur additiven Fertigung eines dreidimensionalen Werkstücks mit den Merkmalen des Oberbegriffs des Anspruchs 1. Ferner betrifft die Erfindung eine Vorrichtung zur additiven Fertigung eines dreidimensionalen Werkstücks mit den Merkmalen des Oberbegriffs des Anspruchs 5.

Die erfindungsgemäße Vorrichtung kann insbesondere zur Durchführung des erfindungsgemäßen Verfahrens eingesetzt werden.

### Stand der Technik

Bei der additiven Fertigung bzw. beim 3D-Drucken werden flüssige oder feste Werkstoffe schichtweise zu einem dreidimensionalen Werkstück aufgebaut. Beispielsweise können thermoplastische Werkstoffe, insbesondere thermoplastische Kunststoffe, eingesetzt werden, die durch Erhitzen zunächst verflüssigt werden. Der flüssige Werkstoff wird dann selektiv auf Stellen aufgebracht, an denen das Werkstück entstehen soll. Mit dem Abkühlen verfestigt sich der Werkstoff wieder.

Einige thermoplastische Werkstoffe neigen dazu, beim Abkühlen zu schwinden.

Das Schwinden führt zu abweichenden Abmessungen des fertigen Werkstücks. Um dem entgegenzuwirken, sind 3D-Drucker mit beheizbaren Baukammern bekannt, so dass eine konstante Temperierung der Baukammer während des Druckvorgangs möglich ist. Ist der Druckvorgang beendet, wird die Baukammer kontrolliert abgekühlt, um ein Abkühlen und Verfestigen des Werkstücks zu ermöglichen. Nach dem Abkühlen wir das Werkstück entnommen und es kann ein neuer Druckvorgang gestartet werden, indem die Baukammer erneut beheizt wird.

Das Dokument WO 00/78519 A1 offenbart ein Verfahren zur additiven Fertigung eines dreidimensionalen Werkstücks, bei dem ein thermoplastischer Werkstoff durch Erhitzen in eine flüssige Phase überführt und selektiv an Stellen aufgetragen wird, die durch die Form und die Abmessungen des Werkstücks vorgegeben sind, wobei das Werkstück schichtweise auf einen Substratträger aufgebaut wird. Der Substratträger und das Werkstück befinden sich dabei in einer Baukammer. Das Dokument offenbart keine zusätzliche Kühlkammer.

Das Dokument CN 204 894 557 U offenbart eine Vorrichtung zur additiven Fertigung, wobei eine Transporteinrichtung zur Verschiebung eines Substratträgers vorgesehen ist.

Der Erfindung liegt die Aufgabe zugrunde, die additive Fertigung eines dreidimensionalen Werkstücks aus einem thermoplastischen Werkstoff effizienter und damit kostengünstiger zu gestalten.

Zur Lösung der Aufgabe werden das Verfahren mit den Merkmalen des Anspruchs 1 sowie die Vorrichtung mit den Merkmalen des Anspruchs 5 vorgeschlagen. Vorteilhafte Weiterbildungen der Erfindung sind den jeweiligen Unteransprüchen zu entnehmen.

### Offenbarung der Erfindung

Bei dem vorgeschlagenen Verfahren zur additiven Fertigung eines dreidimensionalen Werkstücks wird ein thermoplastischer Werkstoff durch Erhitzen in eine flüssige Phase überführt und selektiv an Stellen aufgetragen, die durch die Form und die Abmessungen des Werkstücks vorgegeben sind. Das Werkstück wird dabei schichtweise auf einem Substratträger aufgebaut.

Dabei wird das schichtweise auf dem Substratträger aufgebaute Werkstück zum Abkühlen und Verfestigen des Werkstoffs aus einer Baukammer, die vorzugsweise beheizt wird, in eine von der Baukammer getrennte Kühlkammer verbracht. Das heißt, dass bei dem Verfahren das Werkstück zum Abkühlen und Verfestigen nicht in der Baukammer verbleibt. Die Baukammer kann somit zur Fertigung eines weiteren Werkstücks genutzt werden, und zwar ohne die Beheizung der Baukammer unterbrechen zu müssen, sofern die Baukammer beheizt wird. Auf diese Weise kann wertvolle Zeit eingespart werden. Denn das sonst übliche Abkühlen und ggf. erneute Aufheizen der Baukammer kann mehrere Stunden in Anspruch nehmen. In dieser Zeit kann nicht gefertigt werden, so diese Zeit unproduktive Zeit ist. Bei dem erfindungsgemäßen Verfahren wird diese unproduktive Zeit sehr stark reduziert. Die additive Fertigung eines dreidimensionalen Werkstücks nach dem erfindungsgemäßen Verfahren, wobei es sich vorzugsweise um ein 3D-Druckverfahren handelt, kann somit effizienter und kostengünstiger durchgeführt werden.

Die Kühlkammer ist vorzugsweise zur Baukammer benachbart angeordnet, so dass eine Verbindung zur Baukammer herstellbar ist, um das schichtweise auf dem Substratträger aufgebaute Werkstück aus der Baukammer in die Kühlkammer zu verbringen.

Durch Automatisierung des Vorgangs kann das Verbringen des schichtweise auf dem Substratträger aufgebauten Werkstücks aus der Baukammer in die Kühlkammer noch effizienter gestaltet werden, da in diesem Fall kein manuelles Eingreifen erforderlich ist.

Zum Verbringen des schichtweise auf dem Substratträger aufgebauten Werkstücks aus der Baukammer in die Kühlkammer wird vorzugsweise eine Transporteinrichtung eingesetzt, über welche der Substratträger bewegt, insbesondere verschoben und/oder verschwenkt, werden kann. Eine solche Transporteinrichtung kann vergleichsweise einfach aufgebaut sein. Der Einsatz einer Transporteinrichtung ermöglicht eine Automatisierung des Vorgangs. Als Transporteinrichtung kann aber auch ein Roboterarm eingesetzt werden.

Vorteilhafterweise wird mit Verbringen des Werkstücks aus der Baukammer in die Kühlkammer ein neuer, noch unbedruckter Substratträger in die Baukammer eingebracht, so dass weiter gefertigt, insbesondere gedruckt, werden kann, während das bereits gefertigte bzw. gedruckte Werkstück in der Kühlkammer abkühlt. Das Einbringen des noch unbedruckten Substratträgers in die Baukammer erfolgt vorzugsweise ebenfalls automatisch, beispielsweise mittels derselben Transporteinrichtung, die auch dem Verbringen eines bedruckten Substratträgers aus der Baukammer in die Kühlkammer dient.

Erfindungsgemäß wird nach dem Abkühlen und Verfestigen des Werkstoffs der Substratträger mit dem Werkstück aus der Kühlkammer entnommen und durch einen noch unbedruckten Substratträger ersetzt. Der unbedruckte Substratträger kann dann mittels der Transporteinrichtung aus der Kühlkammer in die Baukammer verbracht werden, bevor mittels derselben Transporteinrichtung ein soeben bedruckter Substratkörper aus der Baukammer in die Kühlkammer verbracht wird. Auf diese Weise kann das Verfahren noch effizienter gestaltet werden, da die Bewegung der Transporteinrichtung in beide Richtungen jeweils zum Verbringen eines Substratträgers genutzt wird.

In Weiterbildung der Erfindung wird vorgeschlagen, dass die Kühlkammer zum kontrollierten Abkühlen eines bedruckten Substratträgers und/oder zum Vorwärmen eines noch unbedruckten Substratträgers beheizt wird. Durch kontrolliertes Abkühlen kann der Schwindung des Werkstücks entgegengewirkt werden, so dass diese - wenn überhaupt - definiert erfolgt. Vorzugsweise kann die Temperatur in der Kühlkammer zumindest annähernd auf die in der Baukammer herrschende Temperatur angehoben werden, so dass das Werkstück keinen Temperatur-Schock erfährt, wenn es aus der Baukammer in die Kühlkammer verbracht wird. Durch Vorwärmen eines noch unbedruckten Substratträgers kann der nachfolgende Druckvorgang schneller gestartet werden.

Des Weiteren wird vorgeschlagen, dass ein noch unbedruckter Substratträger aus der Kühlkammer unter einen in der Baukammer angeordneten bedruckten Substratträger platziert wird und der bedruckte Substratträger anschließend in die Kühlkammer verbracht wird. Auf diese Weise kann die Efffizienz des Verfahrens weiter gesteigert werden. Das Platzieren und Verbringen der Substratträger erfolgt vorzgusweise mittels der bereits genannten Transporteinrichtung, wobei es sich auch um einen Roboterarm handeln kann. Um das Ergreifen eines Substratträgers zu erleichtern und/oder dessen Lage während des Transports zu sichern, kann dieser mindestens eine Ausnehmung aufweisen, in welche die Transporteinrichtung eingreift.

Bevorzugt weist ein Substratträger eine bedruckbare Oberfläche auf, die mit einer speziellen Beschichtung versehen ist, um die Haftung des flüssigen thermoplastischen Werkstoffs auf der Oberfläche zu verbessern.

Zur Lösung der eingangs genannten Aufgabe wird ferner eine Vorrichtung zur additiven Fertigung eines dreidimensionalen Werkstücks aus einem durch Erhitzen verflüssigten thermoplastischen Werkstoff vorgeschlagen. Die Vorrichtung umfasst eine Baukammer zur Aufnahme eines Substratträgers, auf dem das Werkstück schichtweise aufbaubar ist. Dabei ist zusätzlich zur Baukammer eine Kühlkammer vorgesehen, die benachbart zur Baukammer angeordnet ist, so dass das schichtweise auf dem Substratträger aufgebaute Werkstück zum Abkühlen und Verfestigen des thermoplastischen Werkstoffs aus der Baukammer in die Kühlkammer verbringbar ist.

Durch die zusätzlich vorgesehene Kühlkammer verkürzt sich die Zeit, in der ein Werkstück in der Baukammer verbleibt. Denn die Verfahrensschritte Abkühlen und Verfestigen des Werkstücks finden außerhalb der Baukammer, und zwar in der Kühlkammer statt. In der Baukammer kann nach Entnahme des Werkstücks gleich das nächste Werkstück gefertigt werden. Dadurch verkürzen sich die Taktzeiten.

Vorzugsweise ist die Baukammer beheizbar, um während der Fertigung des Werkstücks eine konstante Temperatur aufrechtzuerhalten. Die Temperatur kann auch nach Fertigstellung eines Werkstücks aufrechterhalten werden, da das Abkühlen und Verfestigen des Werkstücks außerhalb der Baukammer erfolgt. Bevorzugt bleibt die Baukammer konstant beheizt, so dass zeitraubende Abkühl- und Wiederaufheizphasen, die mehrere Stunden in Anspruch nehmen können, entfallen.

Bei der vorgeschlagenen Vorrichtung handelt es sich vorzugsweise um einen 3D-Drucker. Dieser unterscheidet sich von bekannten 3D-Druckern dadurch, dass mindestens zwei Kammern vorgesehen sind, wobei eine erste Kammer als Baukammer und eine weitere Kammer als Kühlkammer dient. Die Kühlkammer kann dabei auch als separate Einheit ausgführt sein, die benachbart zur Baukammer an den 3D-Drucker andockbar ist. Auf diese Weise lassen sich 3D-Drucker, die nur eine Baukammer aufweisen, zu einer erfindungsgemäßen Vorrichtung nachrüsten.

Zur Beschleunigung des Abkühlprozesses ist vorzugsweise die Kühlkammer herunterkühlbar, beispielsweise durch Beaufschlagung mit kühler Luft.

Erfindungsgemäß sind die Baukammer und die Kühlkammer durch eine bewegliche Wand voneinander getrennt. Über die bewegliche Wand ist eine Verbindung der Baukammer mit der Kühlkammer herstellbar, um ein fertig gedrucktes Werkstück direkt aus der Baukammer in die Kühlkammer zu verbringen. Vorzugsweise kann die Wand verschoben, insbesondere angehoben und/oder abgesenkt, werden, um eine Verbindung zwischen der Kühlkammer und der Baukammer herzustellen. Eine verschiebbare Wand ist besonders einfach realisierbar und erfordert zudem wenig Bauraum.

Des Weiteren bevorzugt ist eine Transporteinrichtung vorgesehen, mittels welcher ein schichtweise auf einem Substratträger aufgebautes Werkstück aus der Baukammer in die Kühlkammer verbringbar, vorzugsweise verschiebbar und/oder verschwenkbar, ist. Die Transporteinrichtung ermöglicht eine Automatisierung der Entnahme des Werkstücks aus der Baukammer, so dass kein manuelles Eingreifen erforderlich ist. Vorzugsweise ist die Transporteinrichtung dazu ausgelegt, das schichtweise auf dem Substratträger aufgebaute Werkstück zu verschieben und/oder zu verschwenken. Dabei werden bevorzugt der Substratträger und das Werkstück in der Weise bewegt, dass das Werkstück seine Ausrichtung in Bezug auf den Substratträger beibehält.

Idealerweise ist die Transporteinrichtung ferner dazu ausgelegt, einen neuen unbedruckten Substratträger aus der Kühlkammer in die Baukammer zu verbringen. Das Einlegen eines neuen Substratträgers in die Baukammer kann demnach ebenfalls automatisiert werden. Das heißt, dass der Druckteilwechsel vollständig automatisiert abläuft und kein manuelles Eingreifen erfordert.

Bevorzugt umfasst die Transporteinrichtung mindestens einen längen- und/oder höhenverstellbaren Arm, der vorzugsweise in der Kühlkammer angeordnet ist. Zur Längen- und/oder Höhenverstellung kann beispielsweise der Arm teleskopartig ausfahrbar sein. Darüber hinaus kann die Transporteinrichtung einen Roboterarm, insbesondere einen 6-Achs-Roboterarm, umfassen, der in alle Raumrichtungen bewegbar ist.

Des Weiteren bevorzugt umfasst die Transporteinrichtung Antriebsmittel, insbesondere einen Motor und/oder einen Hubzylinder. Derartige Antriebsmittel ermöglichen die Ausbildung eines Kopplergetriebes zur Realisierung einer automatischen Längen- und/oder Höhenverstellung, beispielsweise analog der Kinematik eines Kofferraumdeckels. Die Antriebsmittel sind vorzugsweise außerhalb der Kühlkamer angeordnet, um sie vor hohen Temperaturen zu schützen.

Vorteilhafterweise ist die Kühlkammer zum kontrollierten Abkühlen des bedruckten Substratträgers und/oder zum Vorwärmen eines noch unbedruckten Substratträgers beheizbar. Durch kontrolliertes Abkühlen können Schwindprozesse vermieden bzw. gezielt gesteuert werden. Durch Vorwärmen eines noch unbedruckten Substratträgers kann die Fertigung beschleunigt werden.

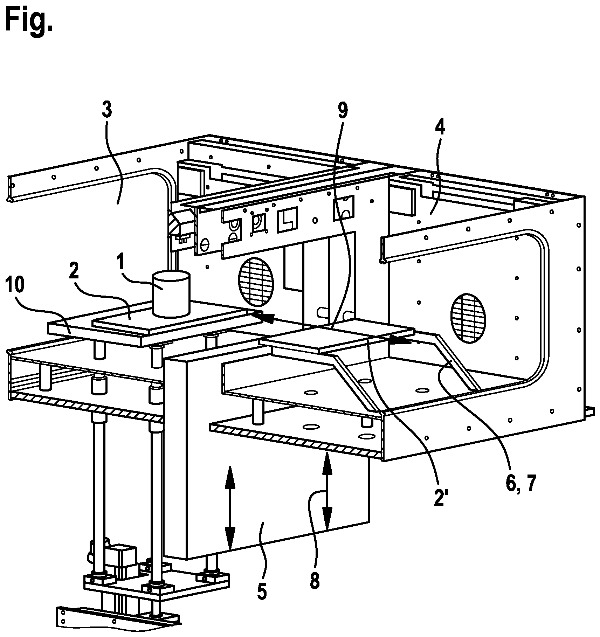

Das erfindungsgemäße Verfahren und die erfindungsgemäße Vorrichtung werden nachfolgend anhand der beigefügten Zeichnung näher beschrieben. Diese zeigt eine perspektivische Schnittansicht einer erfindungsgemäßen Vorrichtung, wobei es sich um einen 3D-Drucker handelt.

### Ausführliche Beschreibung der Zeichnung

Die in der Figur dargestellte Vorrichtung umfasst zwei Kammern, und zwar eine Baukammer 3 und eine Kühlkammer 4, die benachbart angeordnet und nur durch eine Wand 5 getrennt sind. In der Baukammer 3 werden dreidimensionale Werkstücke 1 aus einem thermoplastischen Werkstoff gefertigt. Der thermoplastische Werkstoff wird hierzu verflüssigt und schichtweise auf einen Substratträger 2 aufgetragen, so dass das zu fertigende Werkstück 1 entsteht. Da ein verflüssigter thermoplastischer Werkstoff verwendet wird, muss das gedruckte Werkstück 1 zur Verfestigung des Werkstoffs abkühlen. Das Abkühlen und Verfestigen erfolgt in der zur Baukammer 3 benachbart angeordneten Kühlkammer 4.

Die zwischen der Baukammer 3 und der Kühlkammer 4 angeordnete Wand 5 ist beweglich, um eine Verbindung zwischen der Baukammer 3 und der Kühlkammer 4 herstellen zu können. Die Wand 5 kann wie ein Schott abgesenkt werden (siehe Pfeil 8), so dass eine große Öffnung entsteht. Ferner ist eine Transporteinrichtung 6 vorgesehen, die zwei längen- und höhenverstellbare Arme 7 zur Aufnahme eines Substratträgers 2 umfasst. Die Transporteinrichtung 6 ist in der Kühlkammer 4 aufgenommen. In ausgefahrenem Zustand reichen die Arme 7 jedoch bis in die Baukammer 3, so dass ein auf den Armen 7 aufliegender unbedruckter Substratträger 2' aus der Kühlkammer 4 in die Baukammer 3 verfahren werden kann (siehe Pfeil 9).

Zu Beginn eines Druckvorgangs wird die Baukammer 3 auf Prozesstemperatur erhitzt, beispielsweise mittels eines integrierten Heizsystems (nicht dargestellt). Gedruckt wird auf einen Substratträger 2, der speziell beschichtet ist, um die Haftung des verflüssigten thermoplastischen Werkstoffs auf der Oberfläche des Substratträgers zu verbessern. Der Substratträger 2 liegt innerhalb der Baukammer 3 auf einem Druckbett 10 auf. Über ein Vakuum oder einen Anschlagbolzen kann er in Position gehalten werden.

Während des Druckvorgangs wird die Kühlkammer 4 ebenfalls auf Baukammertemperatur erhitzt. Auf den Armen 7 der Transporteinrichtung 6 liegt ein weiterer unbedruckter Substratträger 2' auf, der für den folgenden Druckauftrag bereits in der Kühlkammer 4 vorgewärmt wird. Nach Beendigung des Druckvorgangs in der Baukammer 3 wird die Wand 5 abgesenkt und die Kühlkammer 4 öffnet sich zur Baukammer 3. Die Arme 7 mit dem aufliegenden vorgewärmten Substratträger 2' fahren in die Baukammer 3 ein und schieben diesen unter den bedruckten Substratträger 2. Anschließend wird der bedruckte Substratträger 2 ergriffen und in die Kühlkammer 4 verfahren. Zum Ergreifen eines Substratträgers 2 kann dieser Einkerbungen (nicht dargestellt) aufweisen, in die entsprechende Rastmittel (nicht dargestellt) der Arme 7 eingreifen. Ist die Transporteinrichtung 6 wieder vollständig eingefahren, hebt sich die Wand 5, um die Baukammer 3 und die Kühlkammer 4 voneinander zu trennen. Denn um den Abkühlvorgang zu starten, wird die Kühlkammer 4 heruntergekühlt, während die Baukammer 3 in ein thermisches Gleichgewicht gebracht wird, um ein neues Werkstück 1 zu drucken. Nachdem das bereits gedruckte Werkstück 1 abgekühlt ist, wird dieses aus der Kühlkammer 4 entnommen und ein neuer unbedruckter Substratträger 2' wird zum Vorwärmen eingelegt.

## Patentansprüche

1. Verfahren zur additiven Fertigung eines dreidimensionalen Werkstücks (1), bei dem ein thermoplastischer Werkstoff durch Erhitzen in eine flüssige Phase überführt und selektiv an Stellen aufgetragen wird, die durch die Form und die Abmessungen des Werkstücks (1) vorgegeben sind, wobei das Werkstück (1) schichtweise auf einem Substratträger (2) aufgebaut wird, **dadurch gekennzeichnet, dass** das schichtweise auf dem Substratträger (2) aufgebaute Werkstück (1) zum Abkühlen und Verfestigen des Werkstoffs aus einer Baukammer (3), die vorzugsweise beheizt wird, in eine von der Baukammer (3) durch eine bewegliche Wand (5) getrennte Kühlkammer (4)
verbracht wird,
und dass nach dem Abkühlen und Verfestigen des Werkstoffs der Substratträger (2) mit dem Werkstück (1) aus der Kühlkammer (4) entnommen und durch einen noch unbedruckten Substratträger (2') ersetzt wird.

2. Verfahren nach Anspruch 1,
**dadurch gekennzeichnet, dass** zum Verbringen des schichtweise auf dem Substratträger (2) aufgebauten Werkstücks (1) der Substratträger (2) mittels einer Transporteinrichtung (6) bewegt, vorzugsweise verschoben und/oder verschwenkt, wird.

3. Verfahren nach einem der vorhergehenden Ansprüche,
**dadurch gekennzeichnet, dass** die Kühlkammer (4) zum kontrollierten Abkühlen des bedruckten Substratträgers (2) und/oder zum Vorwärmen eines noch unbedruckten Substratträgers (2') beheizt wird.

4. Verfahren nach einem der vorhergehenden Ansprüche,
**dadurch gekennzeichnet, dass** ein noch unbedruckter Substratträger (2') aus der Kühlkammer (4) unter einen in der Baukammer (3) angeordneten bedruckten Substratträger (2) platziert wird und anschließend der bedruckte Substratträger (2) in die Kühlkammer (4) verbracht wird.

5. Vorrichtung zur additiven Fertigung eines dreidimensionalen Werkstücks (1) aus einem durch Erhitzen verflüssigten thermoplastischen Werkstoff, umfassend einen Substratträger (2,2'), eine vorzugsweise beheizbare Baukammer (3) zur Aufnahme des Substratträgers (2, 2'), auf dem das Werkstück (1) schichtweise aufbaubar ist, wobei zusätzlich zur Baukammer (3) eine Kühlkammer (4) vorgesehen ist, die benachbart zur Baukammer (3) angeordnet ist, **dadurch gekennzeichnet, dass** die Vorrichtung einen weiteren Substratträger (2,2') umfasst, wobei die Baukammer (3) und die Kühlkammer (4) durch eine bewegliche Wand (5) voneinander getrennt sind, so dass das schichtweise auf dem Substratträger (2) aufgebaute Werkstück (1) zum Abkühlen und Verfestigen des thermoplastischen Werkstoffs aus der Baukammer (3) in die Kühlkammer (4) verbringbar ist, wobei der Substratträger (2) nach dem Abkühlen und Verfestigen des Werkstoffs mit dem Werkstück (1) aus der Kühlkammer (4) entnehmbar und durch den noch unbedruckten weiteren Substratträger (2') ersetzbar ist.

6. Vorrichtung nach Anspruch 5,
**dadurch gekennzeichnet, dass** eine Transporteinrichtung (6) vorgesehen ist, mittels welcher ein schichtweise auf einem Substratträger (2) aufgebautes Werkstück (1) aus der Baukammer (3) in die Kühlkammer (4) verbringbar, vorzugsweise verschiebbar und/oder verschwenkbar, ist.

7. Vorrichtung nach Anspruch 6,
**dadurch gekennzeichnet, dass** die Transporteinrichtung (6) mindestens einen längen- und/oder höhenverstellbaren Arm (7), insbesondere einen Roboterarm, umfasst, der vorzugsweise in der Kühlkammer (4) angeordnet ist.

8. Vorrichtung nach Anspruch -6 oder 7,
**dadurch gekennzeichnet, dass** die Transporteinrichtung (6) Antriebsmittel, insbesondere einen Motor und/oder einen Hubzylinder, umfasst, die vorzugsweise außerhalb der Kühlkamer (4) angeordnet sind.

9. Vorrichtung nach einem der Ansprüche 5 bis 8,
**dadurch gekennzeichnet, dass** die Kühlkammer (4) zum kontrollierten Abkühlen des bedruckten Substratträgers (2) und/oder zum Vorwärmen eines noch unbedruckten Substratträgers (2') beheizbar ist.

## Claims

1. Method for the additive manufacturing of a three-dimensional workpiece (1) in which a thermoplastic material is changed by means of heating to a liquid phase and selectively applied at locations which are predetermined by the shape and the dimensions of the workpiece (1), wherein the workpiece (1) is built up in layers on a substrate carrier (2),
**characterized in that** the workpiece (1) which is built up in layers on the substrate carrier (2) is moved to cool and solidify the material from a construction chamber (3), which is preferably heated, into a cooling chamber (4) which is separated from the construction chamber (3) by a movable wall (5),
and **in that**, after the cooling and solidification of the material, the substrate carrier (2) with the workpiece (1) is removed from the cooling chamber (4) and replaced with a still unprinted substrate carrier (2').

2. Method according to Claim 1,
**characterized in that**, in order to move the workpiece (1) which is built up in layers on the substrate carrier (2), the substrate carrier (2) is moved, preferably displaced and/or pivoted, by means of a transport device (6).

3. Method according to one of the preceding claims, **characterized in that** the cooling chamber (4) is heated for controlled cooling of the printed substrate carrier (2) and/or for preheating a substrate carrier (2') which is still unprinted.

4. Method according to one of the preceding claims, **characterized in that** a substrate carrier (2') which is still unprinted is placed from the cooling chamber (4) under a printed substrate carrier (2) which is arranged in the construction chamber (3) and the printed substrate carrier (2) is subsequently moved into the cooling chamber (4).

5. Apparatus for the additive manufacturing of a three-dimensional workpiece (1) from a thermoplastic material which is liquefied by means of heating, comprising a substrate carrier (2, 2'), a construction chamber (3) which can preferably be heated for receiving the substrate carrier (2, 2') on which the workpiece (1) can be built up in layers, wherein
in addition to the construction chamber (3) there is provided a cooling chamber (4) which is arranged adjacent to the construction chamber (3),
**characterized in that** the apparatus comprises a further substrate carrier (2, 2'), wherein the construction chamber (3) and the cooling chamber (4) are separated from each other by means of a movable wall (5), so that the workpiece (1) which is built up in layers on the substrate carrier (2) can be moved for cooling and solidifying the thermoplastic material from the construction chamber (3) into the cooling chamber (4), wherein, after the cooling and solidification of the material, the substrate carrier (2) with the workpiece (1) can be removed from the cooling chamber (4) and can be replaced with a still unprinted further substrate carrier (2').

6. Apparatus according to Claim 5,
**characterized in that** there is provided a transport device (6) by means of which a workpiece (1) which is built up in layers on a substrate carrier (2) can be moved, preferably displaced and/or pivoted, from the construction chamber (3) into the cooling chamber (4).

7. Apparatus according to Claim 6,
**characterized in that** the transport device (6) comprises at least one longitudinally and/or vertically adjustable arm (7), in particular a robot arm, which is preferably arranged in the cooling chamber (4).

8. Apparatus according to Claim 6 or 7,
**characterized in that** the transport device (6) comprises drive means, in particular a motor and/or a lifting cylinder which are preferably arranged outside the cooling chamber (4).

9. Apparatus according to one of Claims 5 to 8,
**characterized in that** the cooling chamber (4) can be heated for controlled cooling of the printed substrate carrier (2) and/or for preheating a still unprinted substrate carrier (2').

## Revendications

1. Procédé de fabrication additive d'une pièce tridimensionnelle (1), selon lequel un matériau thermoplastique est passé dans une phase liquide par chauffage et appliqué sélectivement à des emplacements qui sont prédéterminés par la forme et les dimensions de la pièce (1), la pièce (1) étant construite en couches sur un support de substrat (2),
**caractérisé en ce que** la pièce (1) construite en couches sur le support de substrat (2) est transférée d'une chambre de construction (3), qui est de préférence chauffée, dans une chambre de refroidissement (4) séparée de la chambre de construction (3) par une paroi mobile (5) pour le refroidissement et la solidification du matériau,
et **en ce qu'**après le refroidissement et la solidification du matériau, le support de substrat (2) est extrait de la chambre de refroidissement (4) avec la pièce (1) et remplacé par un support de substrat (2') encore non imprimé.

2. Procédé selon la revendication 1,
**caractérisé en ce que**, pour le transfert de la pièce (1) construite en couches sur le support de substrat (2), le support de substrat (2) est déplacé au moyen d'un appareil de transport (6), de préférence coulissé et/ou pivoté.

3. Procédé selon l'une quelconque des revendications précédentes,
**caractérisé en ce que** la chambre de refroidissement (4) est chauffée pour le refroidissement contrôlé du support de substrat imprimé (2) et/ou pour le préchauffage d'un support de substrat encore non imprimé (2').

4. Procédé selon l'une quelconque des revendications précédentes,
**caractérisé en ce qu'**un support de substrat encore non imprimé (2') provenant de la chambre de refroidissement (4) est placé sous un support de substrat imprimé (2) agencé dans la chambre de construction (3), puis le support de substrat imprimé (2) est transféré dans la chambre de refroidissement (4).

5. Dispositif pour la fabrication additive d'une pièce tridimensionnelle (1) à partir d'un matériau thermoplastique liquéfié par chauffage, comprenant un support de substrat (2, 2'), une chambre de construction (3) de préférence chauffante pour la réception du support de substrat (2, 2'), sur lequel la pièce (1) peut être construite en couches,
une chambre de refroidissement (4) étant prévue en plus de la chambre de construction (3), qui est agencée à côté de la chambre de construction (3),
**caractérisé en ce que** le dispositif comprend un support de substrat supplémentaire (2, 2'), la chambre de construction (3) et la chambre de refroidissement (4) étant séparées l'une de l'autre par une paroi mobile (5), de telle sorte que la pièce (1) construite en couches sur le support de substrat (2) peut être transférée à partir de la chambre de construction (3) dans la chambre de refroidissement (4) pour le refroidissement et la solidification du matériau thermoplastique, le support de substrat (2) pouvant être extrait de la chambre de refroidissement (4) avec la pièce (1) après le refroidissement et la solidification du matériau, et remplacé par le support de substrat supplémentaire encore non imprimé (2').

6. Dispositif selon la revendication 5,
**caractérisé en ce qu'**un appareil de transport (6) est prévu, au moyen duquel une pièce (1) construite en couches sur un support de substrat (2) peut être transférée à partir de la chambre de construction (3) dans la chambre de refroidissement (4), de préférence coulissée et/ou pivotée.

7. Dispositif selon la revendication 6,
**caractérisé en ce que** l'appareil de transport (6) comprend au moins un bras (7) ajustable en longueur et/ou en hauteur, notamment un bras robotique, qui est de préférence agencé dans la chambre de refroidissement (4) .

8. Dispositif selon la revendication 6 ou 7,
**caractérisé en ce que** l'appareil de transport (6) comprend des moyens d'entraînement, notamment un moteur et/ou un vérin de levage, qui sont de préférence agencés à l'extérieur de la chambre de refroidissement (4) .

9. Dispositif selon l'une quelconque des revendications 5 à 8,
**caractérisé en ce que** la chambre de refroidissement (4) peut être chauffée pour le refroidissement contrôlé du support de substrat imprimé (2) et/ou pour le préchauffage d'un support de substrat encore non imprimé (2').
